# EUROPÄISCHE PATENTSCHRIFT

(11) **EP 1 776 563 B1**
(45) Veröffentlichungstag und Bekanntmachung des Hinweises auf die Patenterteilung: **12.06.2013**
(21) Anmeldenummer: 05773268.7
(22) Anmeldetag: 05.08.2005
(51) Int. Cl.: G01D 5/00

(54) **ADAPTIVE REGELVORRICHTUNG, VERWENDUNG DER REGELVORRICHTUNG, SENSOR MIT EINER DERARTIGEN REGELVORRICHTUNG UND ADAPTIVES VERFAHREN ZUR SELBSTKOMPENSATION VON STÖRSIGNALEN EINES SENSORS**
ADAPTIVE CONTROL DEVICE, USE THEREOF, SENSOR COMPRISING A CONTROL DEVICE OF THIS TYPE AND ADAPTIVE METHOD FOR THE AUTOMATIC COMPENSATION OF THE PARASITIC SIGNALS OF A SENSOR
DISPOSITIF DE REGLAGE ADAPTATIF, SON UTILISATION, DETECTEUR COMPRENANT LEDIT DISPOSITIF DE REGLAGE ET PROCEDE ADAPTATIF POUR AUTOCOMPENSER DES SIGNAUX BROUILLEURS D'UN DETECTEUR

(30) Priorität: 06.08.2004 DE 102004038370
(43) Veröffentlichungstag der Anmeldung: 25.04.2007
(73) Patentinhaber: ams AG, 8141 Unterpremstätten (AT)
(72) Erfinder: FRÖHLICH, Thomas, CH-8307 Ottikon (CH); OBERHOFFNER, Gerhard, A-8010 Graz (AT)
(74) Vertreter: Epping - Hermann - Fischer
(86) Internationale Anmeldenummer: PCT/EP2005/008543
(87) Internationale Veröffentlichungsnummer: WO 2006/015823

(56) Entgegenhaltungen:
- EP-A- 0 469 617
- EP-A- 1 439 440
- WO-A1-96/41120
- DE-A1- 4 129 577
- DE-A1- 19 936 763

## Beschreibung

Die Erfindung betrifft eine adaptive Regelvorrichtung zur Selbstkompensation von Störsignalen eines Sensors mit einer in einem Regelkreis angeordneten Vergleichsanordnung, der Eingangswerte des Regelkreises sowie Korrekturwerte einer Korrektureinrichtung zugeführt sind.

Die Erfindung betrifft weiter ein adaptives Verfahren zur Selbstkompensation von Störsignalen eines Sensors, bei dem Eingangswerte mit Korrekturwerten verglichen werden. Ein Sensor mit einer erfindungsgemäßen Regelvorrichtung sowie eine Verwendung einer derartigen Regelvorrichtung zur Selbstkompensation von Störsignalen eines Sensors sind ebenfalls Gegenstand der vorliegenden Erfindung.

Eine derartige Regelvorrichtung beziehungsweise ein derartiges Verfahren zur Selbstkompensation von Störsignalen eines Sensors ist beispielsweise aus der DE 199 36 763 A1 oder der US 2003/0178989 A1 bekannt, wobei der Sensor ein Hallsensor ist. Die darin offenbarte Regelvorrichtung weist eine in einem Regelkreis angeordnete Vergleichsanordnung sowie eine der Vergleichsanordnung nachgeschaltete Auswerteeinrichtung auf, die Ausgangswerte der Vergleichsanordnung in Ergebniswerte umsetzt. Die Ergebniswerte sind einer Korrektureinrichtung zugeführt, die Korrekturwerte erzeugt, wobei der Vergleichsanordnung diese Korrekturwerte sowie Eingangswerte des Regelkreises zugeführt sind und die Eingangswerte um die Korrekturwerte korrigiert werden. Diese Regelvorrichtung kann unabhängig von einer Betriebsweise eines Sensors betrieben werden.

Das Störsignal ist ein als konstant angenommener Offset. Der Offset wird mit dieser Regelvorrichtung zwar zu einem großen Teil eliminiert, es verbleibt jedoch auch eine nicht zu vernachlässigende Ungenauigkeit im Verhältnis Störsignal zu Nutzsignal. Ein weiterer Nachteil ist, dass die Regelvorrichtung bei zeitlich veränderlichen Störsignalen nicht oder nur begrenzt einsetzbar ist.

Bekannte Methoden zur Kompensation von Störsignalen, insbesondere von Offsets, umfassen Kalibrierungszyklen, Justieren eines Signals und Kompensieren einer Drift eines Störsignals mittels Hochpass-Filtern. Für einige Anwendungen können diese Techniken nicht verwendet werden, weil z.B. das Durchführen von Kalibrierungszyklen nicht möglich ist oder weil das Eingangssignal über lange Zeiten konstant sein kann, so dass ein Hochpassfilter Fehler verursachen kann.

Eine Aufgabe der vorliegenden Erfindung ist es, eine Regelvorrichtung bereitzustellen, mittels der eine neuartige und für viele Anwendungen:genauere Selbstkompensation von Störsignalen eines Sensors sowie eine Selbstkompensation von zeitlich veränderlichen Störsignalen möglich ist. Weitere Aufgaben der Erfindung sind das Bereitstellen eines Sensors mit einer derartigen Regelvorrichtung, die Verwendung einer derartigen Regelvorrichtung zur Selbstkompensation von Störsignalen eines Sensors sowie eines Verfahrens zur Selbstkompensation von Störsignalen, mittels dem insbesondere eine derartige Regelvorrichtung betrieben werden kann.

Diese Aufgaben werden durch eine Regelvorrichtung, ein Verfahren, einen Sensor sowie eine Verwendung einer Regelvorrichtung gemäß der unabhängigen Ansprüche gelöst. Vorteilhafte Ausgestaltungen der Erfindung sind in weiteren Ansprüchen gekennzeichnet.

Die Regelvorrichtung der Eingangs genannten Art weist eine der Vergleichsanordnung nachgeschaltete Auswerteeinrichtung auf, die Ausgangswerte der Vergleichsanordnung in Ergebniswerte umsetzt. Erfindungsgemäß sind der Korrektureinrichtung sowohl die Ergebniswerte als auch die Eingangswerte des Regelkreises zugeführt.

Der Korrektureinrichtung sind also nicht lediglich die Ergebniswerte zugeführt, sondern zusätzlich auch die Eingangswerte. Diese Eingangswerte sind zudem auch der in dem Regelkreis angeordneten Vergleichsanordnung zugeführt, ebenso wie die Korrekturwerte, die von der Korrektureinrichtung erzeugt werden.

Erfindungsgemäß wird die Regelvorrichtung auch zur Selbstkompensation von Störsignalen eines Sensors verwendet und ist insbesondere Bestandteil eines Sensors, obwohl sie an sich unabhängig von einer übrigen Beschaffenheit des Sensors oder einer Betriebsweise des Sensors beschaffen sein kann.

Bei dem erfindungsgemäßen Verfahren zur Selbstkompensation von Störsignalen eines Sensors werden Eingangswerte mit Korrekturwerten verglichen, die Vergleichsergebnisse zu Ergebniswerten umgesetzt und aus den Eingangswerten und den Ergebniswerten Korrekturwerte erzeugt. Das Verfahren ist insbesondere für einen Betrieb der Regelvorrichtung geeignet.

Das Verfahren basiert auf dem Prinzip, dass aus Eingangswerten, die in der Regel Störsignale aufweisen, sowie aus Ergebniswerten, die aus Vergleichsergebnissen erzeugt werden und ebenfalls noch einen Anteil der Störsignale aufweisen können, Korrekturwerte für die Eingangswerte erzeugt werden. Je öfter Korrekturwerte erzeugt werden, desto genauer werden diese bzw. die Ergebniswerte, d.h. der Anteil von Störsignalen in den Vergleichsergebnissen konvergiert im Wesentlichen gegen Null.

Das Verfahren ist somit grundsätzlich auch zur Selbstkompensation von zeitlich veränderlichen Störsignalen geeignet, da sowohl die Eingangswerte als auch die Ergebniswerte in die Erzeugung der Korrekturwerte einfließen. Eine Veränderung des Störsignals führt in der Regel zu einer veränderten Beziehung von Eingangswerten zu Ergebniswert. Zudem ist es mit dem Verfahren bzw. mittels der Vorrichtung grundsätzlich möglich, ein Störsignal im wesentlichen vollständig zu kompensieren.

Das Erzeugen von Korrekturwerten umfasst bevorzugt einen Vergleich eines Ergebniswertes mit Referenzgrößen. Entspricht der Ergebniswert einer Referenzgröße, werden Eingangswerte gespeichert, die dem Ergebniswert zugeordnet sind. Nachdem für die Referenzgrößen Eingangswerte gespeichert sind, werden aus einem Vergleich einer zu erwartenden Beziehung mit einer tatsächlichen Beziehung gespeicherter Eingangswerte zueinander Korrekturwerte erzeugt.

Dadurch, dass die Eingangswerte nicht direkt zu Ergebniswerten umgesetzt werden, sondern sie zunächst um Korrekturwerte korrigiert werden, führen identische Eingangswerte in der Regel nach jeder Erzeugung neuer Korrekturwerte zu unterschiedlichen Ergebniswerten. Dies hat vorteilhafterweise wiederum einen Einfluss auf die Erzeugung der Korrekturwerte.

Bei einer vorteilhaften Ausführungsform des Verfahrens werden jeweils mindestens zwei Eingangswerte zu einem Ergebniswert umgesetzt. Anders ausgedrückt ist der Eingangswert ein mindestens zweiwertiger Vektor.

Besonders bevorzugt wird der Ergebniswert bei dem Verfahren mit mindestens zwei Paaren von Referenzgrößen verglichen, was mit Vorteil zu einer erhöhten Genauigkeit und Stabilität des Verfahrens führen kann.

Bei einer weiteren bevorzugten Ausführungsform des Verfahrens ist der Ergebniswert ein Winkel. Das Verfahren eignet sich mit Vorteil insbesondere zur Fehlerkompensation von Störsignalen eines Magnetfeldsensors zur Winkelmessung.

Zweckmäßigerweise entsprechen die Eingangswerte, die verschiedenen Ergebniswerten zugeordnet sind, bei einer zu erwartenden Beziehung zueinander Punkten eines Koordinatensystems, die auf einer punktsymmetrischen Kurve liegen. Dabei sind bevorzugt die Punkte, die gespeicherten Eingangswerten entsprechen bzw. die zu einem Ergebniswert umgesetzt sind, der einem Referenzwert entspricht, bei einer zu erwartenden Beziehung punktsymmetrisch um den Ursprung angeordnet. Derartige Eingangswerte mit einer derartigen zu erwartenden Beziehung zueinander sind vorteilhafterweise für eine Anwendung des Verfahrens besonders geeignet.

Mit besonderem Vorteil wird bei der Erzeugung der Korrekturwerte aus den gespeicherten Eingangswerten, die einer gleichen Koordinate beziehungsweise einer gleichen Vektorkomponente entsprechen, jeweils eine gewichtete Summe gebildet.

Bei einer weiteren vorteilhaften Ausführungsform des Verfahrens umfasst die Erzeugung der Korrekturwerte ein Filtern von Werten mittels eines Filters. Das Filter hat besonders bevorzugt die Wirkung einer Stufenfunktion. Durch die Verwendung eines Filters kann verhindert werden, dass der Korrekturwert bei starken Schwankungen des Störsignals divergiert.

Besonders bevorzugt wird der Ergebniswert aus einem ersten korrigierten Eingangswert x und einem zweiten korrigierten Eingangswert y umgesetzt, wobei dieses Umsetzen eine Berechnung von arctan(y/x) umfasst.

Die Regelvorrichtung ist besonders bevorzugt derart gestaltet, dass die Korrektureinrichtung eine Detektiereinrichtung aufweist, die Eingangswerte in Abhängigkeit der Ergebniswerte in einer Speichereinrichtung speichert.

Hierzu weist die Detektiereinrichtung neben der Speichereinrichtung mit Vorteil einen Referenzspeicher und einen Komparator auf, wobei der Komparator die Ergebniswerte mit in dem Referenzspeicher gespeicherten Referenzgrößen vergleicht.

Die Detektiereinrichtung weist mit besonderem Vorteil einen Vorspeicher auf, in dem die Eingangswerte temporär gespeichert werden. Somit ist es möglich, dass die Eingangswerte auch dann noch abrufbar sind, wenn aus ihnen zunächst Ergebniswerte umgesetzt worden sind und die Ergebniswerte mit den Referenzgrößen verglichen worden sind.

Die Korrektureinrichtung weist zweckmäßigerweise einen Korrekturwerterzeuger auf, der aus den in der Speichereinrichtung gespeicherten Eingangswerten Korrekturwerte erzeugt.

Bei der erfindungsgemäβen Regelvorrichtung weist der Korrekturwerterzeuger einen Akkumulator auf, der eine gewichtete Summe von gespeicherten Eingangswerten erzeugt.

Mit Vorteil weist der Korrekturwerterzeuger zusätzlich oder alternativ einen Filter, insbesondere einen nichtlinearen Filter auf.

Die Erfindung wird nachfolgend anhand von Ausführungsbeispiele und dazugehörigen Figuren näher erläutert. Gleiche oder gleichwirkende Elemente sind mit gleichen Bezugszeichen versehen. Es zeigen:
- Figur 1: einen schematischen Aufbau einer Regelvorrichtung,
- Figur 2: eine detaillierte schematische Darstellung der in Figur 1 dargestellten Regelvorrichtung und
- Figur 3: eine schematische Darstellung eines weiteren Ausführungsbeispiels der Regelvorrichtung.

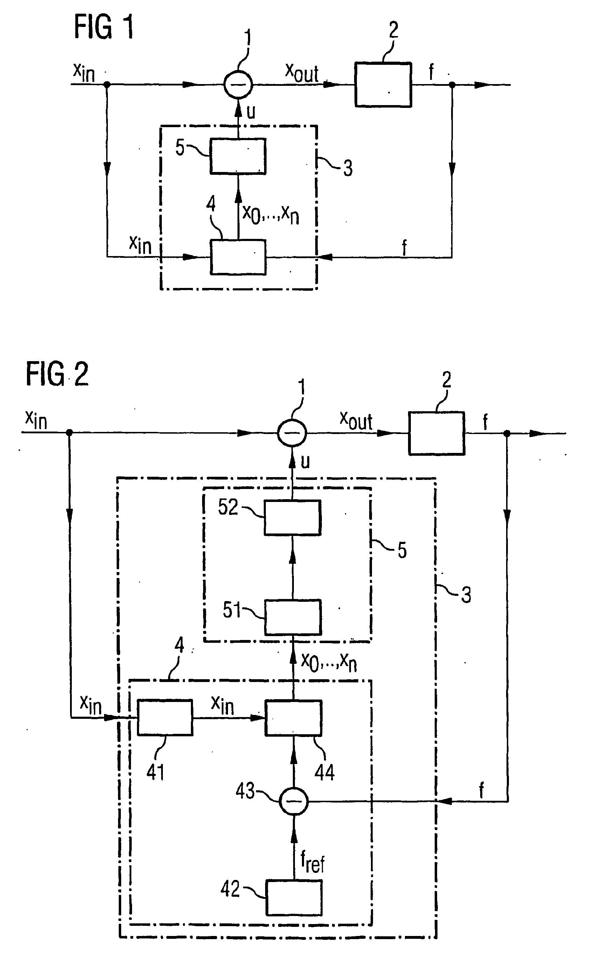

Der schematischen Darstellung einer Regelvorrichtung von Figur 1 ist ein prinzipieller Aufbau der Regelvorrichtung bzw. ein prinzipieller Ablauf des Verfahrens entnehmbar. Eingangswerte xᵢₙ sind sowohl einer Korrektureinrichtung 3 als auch einer Vergleichsanordnung 1 zugeführt. Der Korrektureinrichtung 3 sind ebenfalls Ergebniswerte f zugeführt, die von der Auswerteeinrichtung 2 aus Ausgangswerten xₒᵤₜ der Vergleichsanordnung 1 umgesetzt werden. Die Ergebniswerte f sind dabei eine Funktion der Ausgangswerte xₒᵤₜ. In der Korrektureinrichtung 3 werden Korrekturwerte u erzeugt, die der Vergleichsanordnung 1 zugeführt sind, so dass die Eingangswerte xᵢₙ anhand der Korrekturwerte u korrigiert werden. Beispielsweise werden die Korrekturwerte von den Eingangswerten abgezogen, d.h. die Vergleichsanordnung 1 ist z.B. eine Subtrahieranordnung.

Der Eingangswert xᵢₙ ist im allgemeinen ein ein- oder mehr-wertiger Vektor, z.B. ist er ein zweiwertiger Vektor, d.h. xᵢₙ steht beispielsweise letztlich für zwei Eingangswerte bzw. für die zwei Vektorkomponenten. Dies gilt z.B. auch für die Ausgangswerte xₒᵤₜ in der Vergleichsanordnung 1. Der Ergebniswert f ist dagegen in diesem Beispiel ein Skalar, der sich im allgemeinen aus einer Funktion von xₒᵤₜ berechnet oder auf Grundlage einer solchen Funktion in der Auswerteeinrichtung 2 aus xₒᵤₜ umgesetzt wird, er kann jedoch auch ein Vektor sein.

Die Korrektureinrichtung 3 weist eine Detektiereinrichtung 4 sowie einen Korrekturwerterzeuger 5 auf. In der Detektiereinrichtung werden in Abhängigkeit der Ergebniswerte f Eingangswerte bzw. Eingangswert-Vektoren xₒ, ..., xₙ gespeichert und dem Korrekturwerterzeuger 5 zugeführt. Die Auswahl der zu speichernden Eingangswerte xᵢₙ in Abhängigkeit des Ergebniswertes f ist bereits ein entscheidender Schritt bei der Erzeugung des Korrekturwertes u und beeinflusst die Beschaffenheit des Korrekturwerterzeugers 5 signifikant. In den gespeicherten Eingangswerten xₒ, ..., xₙ ist durch ihre Auswahl implizit auch jeweils der zugeordnete Ergebniswert f berücksichtigt und somit der Korrektureinrichtung 3 zugeführt. Die Zuordnung der gespeicherten Eingangswerte zu dem entsprechenden Ergebniswert f bzw. dem Referenzwert f_{ref} kann alternativ auch explizit als separate Information gespeichert sein.

Die Detektiereinrichtung 4 ist beispielsweise wie in Figur 2 dargestellt aufgebaut. Sie weist einen Referenzspeicher 42 auf, in dem n Referenzwerte f_{ref} gespeichert sind. Diese Referenzwerte f_{ref} und die Ergebniswerte f sind einem Komparator 43 zugeführt, der den jeweiligen Ergebniswert f mit den Referenzwerten f_{ref} vergleicht.

Stimmt der Ergebniswert f mit einem der n Referenzwerte f_{ref} überein, so wird einer Speichereinrichtung 44 von dem Komparator 43 ein entsprechendes Signal zugeführt. Dieses Signal bewirkt, dass Eingangswerte xᵢₙ, die dem Ergebniswert f zugeordnet sind, in der Speichereinrichtung 44 gespeichert werden, d.h. sie werden z.B. von einem Vorspeicher 41, in dem sie temporär zwischengespeichert sind, der Speichereinrichtung 44 zugeführt und in der Speichereinrichtung 44 gespeichert, falls ein entsprechendes Signal des Komparators 43 vorliegt.

Die in der Speichereinrichtung 44 gespeicherten Eingangswerte x₀, ..., xₙ sind dem Korrekturwerterzeuger 5 zugeführt, der diese zu dem Korrekturwert u umsetzt. Die gespeicherten Eingangswerte x₀, ..., xₙ haben eine zu erwartende Beziehung zueinander, d.h. eine Beziehung, die bei Abwesenheit von Störsignalen zu erwarten wäre. Tatsächlich weisen sie jedoch in der Regel einen Anteil an Störsignalen auf, so dass sich ihr tatsächliches Verhältnis zueinander von dem zu erwartenden Verhältnis unterscheidet. Auf Grundlage dieses Unterschiedes wird in dem Korrekturwerterzeuger 5 der Korrekturwert u berechnet.

Ein Störsignal überlagert sich einem eigentlich zu erzeugenden Nutzsignal eines Sensors und kann z.B. durch Fertigungstoleranzen und einen dadurch bedingten, nicht idealen Aufbau eines Sensors entstehen. Zu einem Störsignal zählt insbesondere auch ein überlagertes Gleichsignal, z.B. ein Offset.

Der Korrekturwerterzeuger weist beispielsweise einen Akkumulator 51 auf, in dem eine gewichtete Summe der Eingangswert-Vektoren x₀, ..., xₙ berechnet wird. Ein derartiger Akkumulator 51 kann beispielsweise verwendet werden, wenn zu erwarten ist, dass die gespeicherten Eingangswerte xₒ, ..., xₙ Punkten in einem Koordinatensystem entsprechen, die punktsymmetrisch um einen Mittelpunkt, beispielsweise um den Ursprung angeordnet sind. Dies ist ein Beispiel für eine zu erwartende Beziehung der gespeicherten Eingangswerte zueinander. Bildet man die Summe der gespeicherten Eingangswert-Vektoren x₀, ..., xₙ, so müsste sich bei tatsächlichem Vorliegen der zu erwartenden Beziehung als Ergebnis der Mittelpunkt ergeben. Die Differenz zwischen dem tatsächlich errechneten Punkt und dem Mittelpunkt ist ein Maß für ein Störsignal, das vorliegt, und entspricht im Falle eines Offsets als Störsignal einem Fehlervektor.

Der Akkumulator 51 bildet eine beliebig gewichtete Summe, die beispielsweise mit einem Faktor 1 oder einem Faktor 1/n geteilt sein kann, wobei n die Anzahl der gespeicherten Eingangswerte ist.

Zusätzlich zu dem Akkumulator 51 kann der Korrekturwerterzeuger 5 z.B. ein Filter 52 aufweisen, dem die Ausgangswerte des Akkumulators 51 zugeführt sind. Das Filter 52 ist beispielsweise ein nichtlineares Filter, durch das z.B. eine maximale Änderung des Korrekturwertes u bei einer Neuberechnung dieses Korrekturwertes limitiert wird. Das Filter 52 hat beispielsweise eine stufenfunktionsartige Wirkung, durch die der Korrekturwert u in Abhängigkeit von den Eingangswerten des Filters 52 um eine Einheitsgröße vergrößert, um eine Einheitsgröße verringert oder gar nicht verändert wird. Alternativ könnte das Filter 52 auch bis zu einem bestimmten maximalen Betrag eines Eingangswertes des Filters 52 lineare Eigenschaften haben und bei größeren Beträgen des Eingangswertes eine Änderung des Korrekturwertes u auf eine maximale Korrekturwertdifferenz limitieren. Dadurch wird die Stabilität der Regelvorrichtung bzw. des Regelkreises erhöht.

Der Korrekturwert u, der im allgemeinen ebenso wie der Eingangswert xᵢₙ ein Vektor mit mehreren, beispielsweise mit zwei Komponenten ist, wird von dem Korrekturwerterzeuger 5 der Vergleichsanordnung 1 zugeführt und mit dem Eingangswert xᵢₙ verglichen.

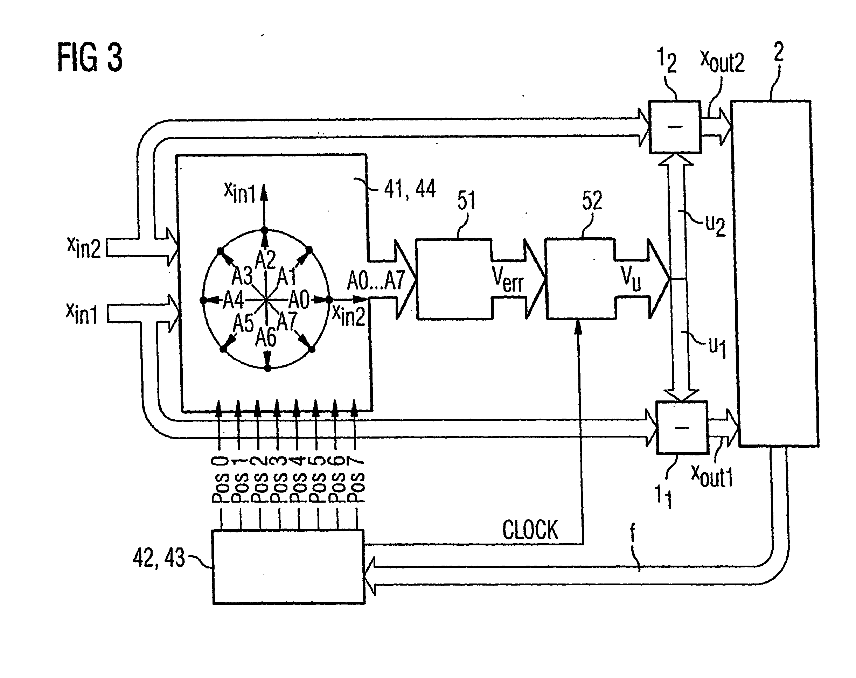

In Figur 3 sind die sowohl einzelne Komponenten des Eingangswertes xᵢₙ als auch einzelne Komponenten des Korrekturwertes u dargestellt. Der Eingangswert xᵢₙ weist zwei Komponenten xᵢₙ₁ und xᵢₙ₂ auf und der Korrekturwert weist die Komponenten u₁ und u₂ auf. Die erste und die zweite Komponente des Eingangswertes xᵢₙ und des Korrekturwertes u werden jeweils an einer Vergleichsanordnung 1₁ bzw. 1₂ miteinander verglichen. Die Ausgangswerte der Vergleichsanordnungen 1₁ bzw. 1₂ sind einer Auswerteeinrichtung 2 zugeführt, in der sie zu einem Ergebniswert f umgesetzt werden.

Die in Figur 3 dargestellte Regelvorrichtung ist z.B. für die Selbstkompensation von Störsignalen eines Magnetfeldsensors, beispielsweise eines Hallsensors ausgerichtet und wird für einen solchen verwendet. Hierzu kann die Vorrichtung sowohl in den Sensor selbst integriert sein, als auch als separate Einheit ausgebildet sein.

Ein Hallsensor wird beispielweise zum kontaktlosen Messen von Winkeln verwendet. Er weist ein Hallelement auf, das im Magnetfeld als Hallsignal ein Spannungssignal abgibt, wenn es von einem Strom senkrecht zum Magnetfeld durchflossen wird. Das Hallsignal, d.h. die Hallspannung, ist abhängig von dem Produkt aus der vertikalen Komponente der magnetischen Flussdichte, dem Hallstrom und der Hallkonstanten. Die Hallkonstante gibt die Sensitivität des Hallelements an und ist materialabhängig.

Der Hallsensor weist z.B. zwei Hallelemente auf, die beispielsweise in einer Ebene angeordnet sind und die in dieser Ebene bezüglich ihres Stromflusses senkrecht zueinander stehen. Dadurch werden von dem Sensor zwei Sensorsignale erzeugt, die sich bei Abwesenheit von Störsignalen zueinander verhalten wie ein Sinus (z.B. xᵢₙ₁) und ein Kosinus (z.B. xᵢₙ₂) eines zu bestimmenden Winkels Φ. Aus den Ausgangswerten xₒᵤₜ₁ und xₒᵤₜ₂ wird in der Auswerteeinrichtung 2 der Winkel Φ ermittelt, z.B. durch die Berechnung von Arcustangens (xₒᵤₜ₁/xₒᵤₜ₂). In diesem Beispiel ist der Ergebniswert f gleich dem Winkel Φ.

Der Ergebniswert f wird einem Komparator 43 zugeführt, mittels dem er mit in einem Referenzspeicher 42 gespeicherten Referenzwerten verglichen wird. Die Referenzwerte sind beispielsweise ebenfalls Winkel, wobei z.B. 4 Winkelpaare gespeichert sind, von denen die Referenzwinkel eines Winkelpaares einen Unterschied von 180° bzw. π zueinander aufweisen. Gleicht der Ergebniswert f einem der Referenzwerte, so wird der Speichereinrichtung 44 ein entsprechendes Signal Pos0 bis Pos7 zugeführt und die Eingangswerte xᵢₙ₁, xᵢₙ₂, die dem Ergebniswert f zugeordnet sind, werden in der Speichereinrichtung 44 gespeichert, wobei sie beispielsweise ebenfalls wie in dem Beispiel gemäß Figur 2 in einem Vorspeicher 41 zwischengespeichert sein können und von diesem Vorspeicher 41 aus der Speichereinrichtung 44 zugeführt sind.

Die gespeicherten Eingangswerte sind zweiwertige Vektoren A0 bis A7. Diese gespeicherten Vektoren sind einem Akkumulator 51 zugeführt, in dem ein Fehlervektor Vₑᵣᵣ berechnet wird. Der Fehlervektor Vₑᵣᵣ ist wiederum einem Filter 52 zugeführt und wird durch dieses zu einem Korrekturwertvektor Vᵤ mit den Vektorkomponenten u₁ und u₂ umgesetzt. Dabei wird z.B. immer dann ein neuer Korrekturwertvektor Vᵤ umgesetzt, wenn ein aktueller Ergebniswert f mit einem der Referenzwerte übereinstimmt. In so einem Fall wird dem Filter 42 jeweils ein Steuersignal CLOCK zugeführt.

Die Regelvorrichtung kann beispielsweise sowohl als fest verdrahtete Logik als auch in einem Mikrocontroller in Form eines Programmes realisiert sein. Die Implementierung der (digitalen) Regelung ist einfach, da nur Addier- und Schiebeoperationen erforderlich sind.

Mit der Regelvorrichtung kann im normalen Betriebsmodus eine vollständige Offsetkompensation erreicht werden. Hierfür sind insbesondere keine Kalibrierzyklen erforderlich, da eine Offsetdrift kompensiert wird, ohne dass ein Hochpassfilter eingesetzt werden muss.

## Patentansprüche

1. Adaptive Regelvorrichtung zur Selbstkompensation von Störsignalen eines Sensors, mit
- einem Regelkreis,
- einer in dem Regelkreis angeordneten Vergleichsanordnung, der Eingangswerte des Regelkreises zugeführt sind,
- einer der Vergleichsanordnung nachgeschalteten Auswerteeinrichtung, die Ausgangswerte der Vergleichsanordnung in Ergebniswerte umsetzt, und
- einer Korrektureinrichtung, der die Ergebniswerte und die Eingangswerte zugeführt sind, die Korrekturwerte erzeugt, die der Vergleichseinrichtung zugeführt sind, und die eine Detektiereinrichtung, die Eingangswerte in Abhängigkeit der Ergebniswerte in einer Speichereinrichtung speichert, aufweist,
**dadurch gekennzeichnet, dass**
die Korrektureinrichtung einen Korrekturwerterzeuger aufweist, der aus den gespeicherten Eingangswerten Korrekturwerte erzeugt, wobei der Korrekturwerterzeuger einen Akkumulator aufweist, der eine gewichtete Summe von gespeicherten Eingangswerten erzeugt.

2. Regelvorrichtung nach Anspruch 1,
bei der die Detektiereinrichtung einen Referenzspeicher und einen Komparator enthält, der die Ergebniswerte mit in dem Referenzspeicher gespeicherten Referenzgrößen vergleicht.

3. Regelvorrichtung nach Anspruch 1 oder 2,
bei der die Detektiereinrichtung einen Vorspeicher aufweist, in dem die Eingangswerte temporär gespeichert werden.

4. Regelvorrichtung nach einem der Ansprüche 1 bis 3,
bei der der Korrekturwerterzeuger ein Filter aufweist.

5. Regelvorrichtung nach einem der Ansprüche 1 bis 4,
bei der die Regelvorrichtung zur Selbstkompensation von Störsignalen eines Magnetfeldsensors ausgelegt ist und die Auswerteeinrichtung ausgelegt ist, als den Ergebniswert einen Winkel abzugeben.

6. Adaptives Verfahren zur Selbstkompensation von Störsignalen eines Sensors mit folgenden Schritten:
- Eingangswerte werden mit Korrekturwerten verglichen und die Vergleichsergebnisse werden zu Ergebniswerten umgesetzt;
- aus den Eingangswerten und den Ergebniswerten werden die Korrekturwerte erzeugt, wobei
- die Eingangswerte in Abhängigkeit von den Ergebniswerten gespeichert werden und die Korrekturwerte durch Bildung einer gewichteten Summe von gespeicherten Eingangswerten gebildet werden.

7. Verfahren nach Anspruch 6,
bei dem das Erzeugen von Korrekturwerten folgende Schritte umfasst:
- ein Ergebniswert wird mit mindestens einem Paar von Referenzgrößen verglichen;
- entspricht der Ergebniswert einem der Referenzgrößen, werden Eingangswerte gespeichert, die dem Ergebniswert zugeordnet sind; und
- nachdem für mindestens ein Paar von Referenzgrößen Eingangswerte gespeichert sind, werden aus einem Vergleich einer zu erwartenden Beziehung mit einer tatsächlichen Beziehung gespeicherter Eingangswerte zueinander Korrekturwerte erzeugt.

8. Verfahren nach einem der Ansprüche 6 und 7,
bei dem jeweils mindestens zwei Eingangswerte zu einem Ergebniswert umgesetzt werden.

9. Verfahren nach einem der Ansprüche 7 und 8,
bei dem der Ergebniswert mit mindestens zwei Paaren von Referenzgrößen verglichen wird.

10. Verfahren nach einem der Ansprüche 6 bis 9,
bei dem der Ergebniswert ein Winkel ist.

11. Verfahren nach einem der Ansprüche 7 bis 10,
bei dem die Eingangswerte, die verschiedenen Ergebniswerten zugeordnet sind, bei einer zu erwartenden Beziehung zueinander Punkten eines Koordinatensystems entsprechen, die auf einer punktsymmetrischen Kurve liegen.

12. Verfahren nach Anspruch 11,
bei dem die Punkte, die gespeicherten Eingangswerten entsprechen, bei einer zu erwartenden Beziehung punktsymmetrisch um den Ursprung angeordnet sind.

13. Verfahren nach einem der Ansprüche 11 und 12,
bei dem aus den gespeicherten Eingangswerten, die einer gleichen Koordinate entsprechen, jeweils eine gewichtete Summe gebildet wird.

14. Verfahren nach einem der Ansprüche 6 bis 13,
bei dem die Erzeugung der Korrekturwerte ein Filtern von Werten mittels eines Filters umfasst.

15. Verfahren nach Anspruch 14,
bei dem das Filter die Wirkung einer Stufenfunktion aufweist.

16. Verfahren nach einem der Ansprüche 6 bis 15,
bei dem aus einem ersten Eingangswert x und einem zweiten Eingangswert y ein Ergebniswert umgesetzt wird und das Umsetzen eine Berechnung von arctan(y/x) umfasst.

17. Sensor mit einer Regelvorrichtung gemäß einem der Ansprüche 1 bis 5.

18. Verwendung einer Regelvorrichtung nach einem der Ansprüche 1 bis 5 zur Selbstkompensation von Störsignalen eines Sensors.

## Claims

1. An adaptive control device for the self-compensation of interfering signals of a sensor, comprising
- a control loop,
- a comparing device which is arranged in the control loop and is fed with input values of the control loop,
- an evaluation device which is arranged downstream of the comparing device and converts output values of the comparing device into resultant values, and
- a correction device which is fed with the resultant values and the input values, generates correction values which are supplied to the comparing device, and comprises a detection device storing input values in a memory device depending on the resultant values,
**characterized in that**
the correction device comprises a correction value generator generating correction values from the stored input values, said correction value generator comprising an accumulator which generates a weighted sum of stored input values.

2. The control device according to claim 1,
in which the detection device comprises a reference memory and a comparator comparing the resultant values with reference quantities stored in the reference memory.

3. The control device according to claim 1 or 2,
in which the detection device comprises a pre-storing means in which the input values are temporarily stored.

4. The control device according to any of the claims 1 to 3, in which the correction value generator comprises a filter.

5. The control device according to any of the claims 1 to 4, in which the control device is designed for the self-compensation of interfering signals of a magnetic field sensor and the evaluation device is designed to deliver an angle as the resultant value.

6. An adaptive method for the self-compensation of interfering signals of a sensor, comprising the following steps:
- input values are compared with correction values and the comparison results are converted into resultant values;
- the correction values are generated from the input values and the resultant values, wherein
- the input values are stored depending on the resultant values and the correction values are generated by generation of a weighted sum of stored input values.

7. The method according to claim 6,
in which the generation of correction values comprises the following steps:
- a resultant value is compared with at least one pair of reference quantities;
- input values associated with the resultant value are stored if the resultant value corresponds to one of the reference quantities; and
- after having stored input values for at least one pair of reference quantities, correction values are generated from a comparison of a mutual expectable relationship with a real relationship of stored input values.

8. The method according to any of the claims 6 and 7,
in which at least two input values are converted into a resultant value in each case.

9. The method according to any of the claims 7 and 8,
in which the resultant value is compared with at least two pairs of reference quantities.

10. The method according to any of the claims 6 to 9,
in which the resultant value is an angle.

11. The method according to any of the claims 7 to 10,
in which the input values associated with different resultant values correspond to points of a coordinate system in case of an expectable mutual relationship, said points being situated on a point-symmetric curve.

12. The method according to claim 11,
in which the points corresponding to stored input values are arranged in a point-symmetric manner around the origin in case of an expectable relationship.

13. The method according to any of the claims 11 and 12,
in which a weighted sum is generated in each case from the stored input values which correspond to the same coordinate.

14. The method according to any of the claims 6 to 13,
in which the generation of the correction values comprises a filtering of values by means of a filter.

15. The method according to claim 14,
in which the filter has the effect of a step function.

16. The method according to any of the claims 6 to 15,
in which a resultant value is converted from a first input value x and a second input value y and the conversion comprises a calculation of arctan(y/x).

17. A sensor comprising a control device according to any of the claims 1 to 5.

18. Use of a control device according to any of the claims 1 to 5 for the self-compensation of interfering signals of a sensor.

## Revendications

1. Dispositif de réglage adaptatif destiné à autocompenser des signaux parasites d'un détecteur, comprenant
- un circuit de réglage,
- un dispositif de comparaison disposé dans le circuit de réglage, auquel des valeurs d'entrée du circuit de réglage sont amenées,
- une unité d'évaluation placée en aval du dispositif de comparaison, qui convertit des valeurs de sortie du dispositif de comparaison en valeurs de résultat, et
- une unité de correction à laquelle les valeurs de résultat et les valeurs d'entrée sont amenées, qui génère des valeurs de correction qui sont amenées au dispositif de comparaison, et qui comprend une unité de détection qui mémorise des valeurs d'entrée dans une unité de mémoire en fonction des valeurs de résultat,
**caractérisé en ce que**
l'unité de correction présente un générateur de valeurs de correction qui génère des valeurs de correction à partir des valeurs d'entrée mémorisées, le générateur de valeurs de correction présentant un accumulateur qui génère une somme pondérée de valeurs d'entrée mémorisées.

2. Dispositif de réglage selon la revendication 1,
dans lequel l'unité de détection contient une mémoire de référence et un comparateur qui compare les valeurs de résultat avec des grandeurs de référence mémorisées dans la mémoire de référence.

3. Dispositif de réglage selon la revendication 1 ou 2,
dans lequel l'unité de détection présente une prémémoire dans laquelle les valeurs d'entrée sont mémorisées temporairement.

4. Dispositif de réglage selon l'une des revendications 1 à 3,
dans lequel le générateur de valeurs de correction présente un filtre.

5. Dispositif de réglage selon l'une des revendications 1 à 4,
le dispositif de réglage étant conçu pour autocompenser des signaux parasites d'un détecteur de champ magnétique et l'unité d'évaluation étant conçue pour délivrer un angle au titre de la valeur de résultat.

6. Procédé adaptatif destiné à autocompenser des signaux parasites d'un détecteur, comprenant les étapes suivantes:
- des valeurs d'entrée sont comparées à des valeurs de correction et les résultats de la comparaison sont convertis en valeurs de résultat;
- les valeurs de correction sont générées à partir des valeurs d'entrée et des valeurs de résultat, sachant que
- les valeurs d'entrée sont mémorisées en fonction des valeurs de résultat et les valeurs de correction sont constituées par constitution d'une somme pondérée de valeurs d'entrée mémorisées.

7. Procédé selon la revendication 6,
dans lequel la génération de valeurs de correction comprend les étapes suivantes:
- une valeur de résultat est comparée à au moins une paire de grandeurs de référence;
- si la valeur de résultat correspond à l'une des grandeurs de référence, des valeurs d'entrée qui sont attribuées à la valeur de résultat sont mémorisées; et
- après que des valeurs d'entrée sont mémorisées pour au moins une paire de grandeurs de référence, des valeurs de correction sont générées à partir d'une comparaison entre un rapport attendu et un rapport effectif de valeurs d'entrée mémorisées entre elles.

8. Procédé selon l'une des revendications 6 et 7,
dans lequel respectivement au moins deux valeurs d'entrée sont converties en une valeur de résultat.

9. Procédé selon l'une des revendications 7 et 8,
dans lequel la valeur de résultat est comparée à au moins deux paires de grandeurs de référence.

10. Procédé selon l'une des revendications 6 à 9,
dans lequel la valeur de résultat est un angle.

11. Procédé selon l'une des revendications 7 à 10,
dans lequel les valeurs d'entrée qui sont attribuées à diverses valeurs de résultat correspondent, dans le cas d'un rapport attendu entre elles, à des points d'un système de coordonnées qui sont situés sur une courbe symétrique par rapport à un point.

12. Procédé selon la revendication 11,
dans lequel les points qui correspondent à des valeurs d'entrée mémorisées sont, dans le cas d'un rapport attendu, disposées de manière symétrique par rapport à un point autour de l'origine.

13. Procédé selon l'une des revendications 11 et 12,
dans lequel respectivement une somme pondérée est constituée à partir des valeurs d'entrée mémorisées qui correspondent à une même coordonnée.

14. Procédé selon l'une des revendications 6 à 13,
dans lequel la génération des valeurs de correction comprend un filtrage de valeurs au moyen d'un filtre.

15. Procédé selon la revendication 14,
dans lequel le filtre présente l'effet d'une fonction à degrés.

16. Procédé selon l'une des revendications 6 à 15,
dans lequel une valeur de résultat est convertie à partir d'une première valeur d'entrée x et d'une deuxième valeur d'entrée y et la conversion comprend un calcul d'arctan (y/x).

17. Détecteur comprenant un dispositif de réglage selon l'une des revendications 1 à 5.

18. Utilisation d'un dispositif de réglage selon l'une des revendications 1 à 5 destiné à autocompenser des signaux parasites d'un détecteur.
